# EUROPEAN PATENT APPLICATION

(11) **EP 1 302 393 A2**
(43) Date of publication of application: **16.04.2003**
(21) Application number: 02022613.0
(22) Date of filing: 09.10.2002
(51) Int. Cl.: B62J 1/00

(54) **Saddle, in particular for bicycles, cyclettes or the like**

(30) Priority: 12.10.2001 IT MI20012116
(71) Applicant: Marella, Carlo, 25037 Pontoglio, (Brescia) (IT); Fenaroli, Privato, 24060 Tavernola Bergamasca, (Bergamo) (IT); Plebani, Elio, 24060 Foresto Sparso, (Bergamo) (IT)
(72) Inventor: Fenaroli, Privato, 24060 Tavernola Bergamasca (Bergamo) (IT)
(74) Representative: Ghioni, Carlo Raoul Maria

(57) **Abstract**

A saddle for bicycles, cyclettes or the like comprises a main body (2) defining a seating surface for a rider and having a rear portion (3) and a front portion (4); the saddle (1) further comprises a given number of support elements that in cooperation define the seating surface and also define at least one main opening (5) uninterruptedly extending from the rear portion (3) to the front portion (4).

## Description

The present invention relates to a saddle to be used in particular for bicycles, exercise bikes or "cyclettes" and similar devices.

It is known that in the field of modern cycling, the ergonomic and physiological requirements must be particularly strong in view of obtaining high athletic performance.

These requirements are particularly felt in the sports sector (as far as both amateurs or professionals are concerned), since a prolonged and intense use of means such as racing bicycles or exercise bikes, also known as "cyclettes", involves a series of problems connected with weariness and with the physical conditions of the individuals using such a means.

For example, a rather frequent problem from a physiological point of view that is found in many "high-level" bicycle users or riders is given by problems arising either from inflammation or from excessive and/or prolonged compression of the prostate gland and/or the urethra. These medical inconveniences are mainly caused by the fact that the rider's weight practically brings these parts of the human body to undergo an excessive pressure also made worse by the biodynamic effects resulting from a continuous and intense pedalling.

In an attempt to reduce these problems, use of saddles of particular conformation is provided in the known art: in more detail, there are saddles that at the rear end thereof are provided with a flare or in special cases with a through cavity.

This through cavity (or flared shape, depending on the cases) is practically located in correspondence with the rider's glutei, when the rider's glutei are really in contact with the saddle; in this way, by eliminating a support for part of the rider's body, an attempt is made to reduce arising of the above described effects resulting from compression.

While these saddles of known type succeed in obtaining an improvement from an ergonomic point of view, they however have some drawbacks too.

In fact, it should be noted that although these saddles are able to alleviate pressure on some parts of the rider's body, they only offer limited benefits to the prostate region. On the other hand, critical biomechanical conditions localized above all at the urethra and the rider/athlete's urogenital tract still persist.

After all, saddles of known type do not allow a complete elimination of the ergonomic problems and traumatological risks, resulting in a trouble for the rider and a reduction in the maximum athletic performance that the rider can obtain.

In addition, it is to be pointed out that known saddles, due to their architecture, have some limitations in terms of minimum weight.

The above being stated, it is a main object of the present invention to make a saddle for bicycles, cyclettes and the like enabling the above mentioned drawbacks to be eliminated; in more detail, the present invention aims at making a saddle that is effective against arising of numbness and/or extended inflammatory phenomena to any portion of the rider's body that is in contact with the saddle itself.

In addition, the present invention aims at obtaining a saddle of less weight as compared with traditional saddles.

Description of a preferred but not exclusive embodiment of a saddle in accordance with the invention is now given by way of non-limiting example with the aid of the accompanying drawings, in which:

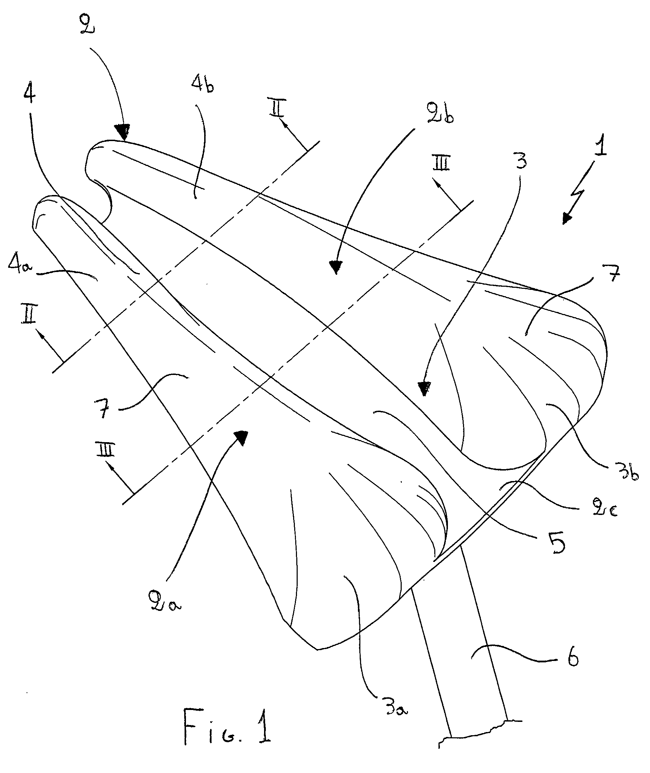

- Fig. 1 is a perspective view of a saddle in accordance with the present invention;

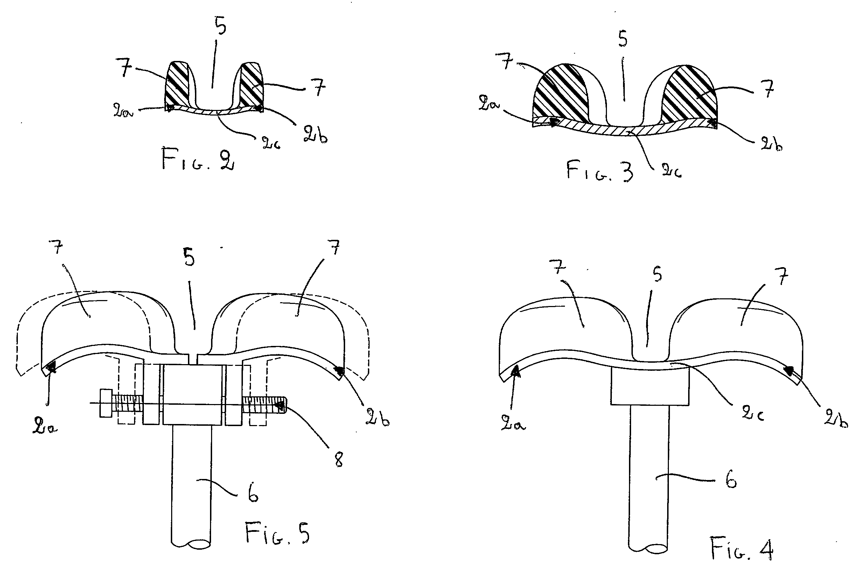

- Figs. 2 and 3 show cross-sections of the saddle in Fig. 1 along lines II-II and III-III in said Fig. 1;
- Fig. 4 is an elevation view of the saddle in Fig. 1; and
- Fig. 5 is an elevation view of an alternative embodiment of the saddle in Fig. 1.

With reference to the drawings, the saddle in accordance with the invention is generally denoted by reference numeral 1. Mainly, such a saddle that can be used on bicycles, cyclettes or vehicles and/or similar training equipment for example, comprises a main body 2 which in turn defines a seating surface for a rider.

Conveniently, the main body 2 has a rear portion 3 with which a front portion 4 is geometrically associated.

Advantageously, saddle 1 further comprises a given number of support elements defining in mutual cooperation, the seating surface, and at the same time also defining at least one main opening 5 uninterruptedly extending from the rear portion 3 to the front portion 4 of saddle 1.

The extension of this main opening 5 enables the prostate region and the urethra region of the rider/athlete positioned on saddle 1 not to be pressed, thereby avoiding inflammatory or more generally traumatic phenomena arising.

It should be at all events noted that a correct contact of the rider/athlete with saddle 1 is in any case ensured by an appropriate extension of the support elements, as clarified in the following.

More particularly, in accordance with an alternative embodiment shown in the drawings, two support elements 2a and 2b are present.

These support elements 2a and 2b are disposed in mutual side by side relationship (and preferably have a symmetric conformation with respect to a longitudinal or middle axis of saddle 1).

The support elements 2a, 2b respectively define a first and a second rear rest surfaces 3a and 3b (placed in correspondence with the rear portion 3 and practically designed to offer a support to the rider/athlete's gluteal region) and a first and a second front rest surfaces 4a and 4b (placed in correspondence with the front portion 4 and designed to offer a support to the rider/athlete's thigh-interior portion).

In accordance with the particular geometrical/structural features of the present invention, the first and second rear rest surfaces 3a and 3b are geometrically separated from each other; at the same time, the first and second front rest surfaces 4a and 4b too are geometrically separated from each other exactly due to the fact that the main opening 5 uninterruptedly extends over the whole length of saddle 1.

If required by particular current necessities (either of ergonomic nature or concerning reduction of the saddle weight, for example), at least one of the support elements (and preferably both of them, for symmetry reasons) may comprise a predetermined number of rest sub-elements that in cooperation, consistently with the above description, define a partial-rest surface.

In more detail, these partial-rest surfaces will be separated by secondary openings that from a geometrical point of view are substantially similar to the main opening 5 but conveniently have smaller extensions and sizes; these secondary openings preferably extend in directions transverse to the main opening 5.

For example, for the purpose of making the above description clearer, the main body 2 may comprise four rest sub-elements that in cooperation define the whole seating surface.

From a geometrical point of view, these four rest sub-elements can be divided as follows: a first rest sub-element defining the first rear rest surface 3a (to support one of the two glutei), a second rest sub-element defining the second rear rest surface 3b (to support the other gluteus), a third rest sub-element defining the first front rest surface 4a (to support a thigh-interior region) and finally a fourth rest sub-element defining the front rest surface 4b (to support the other thigh-interior region).

To give the saddle 1 a structural continuity (and also a predetermined capability of being deformed or at all events a given elastic behaviour), the main body 2 may also include a connecting portion 2c; this connecting portion 2c extends between at least two support elements (or also between at least two rest sub-elements, if any) and practically defines (in cooperation with these support elements 2a and 2b) the main opening 5 or also, still in the case that several rest sub-elements are present, in cooperation with said rest sub-elements defines at least one, and preferably all of the secondary openings.

In order to conveniently connect the saddle 1 with the frame of a vehicle or a training equipment, the presence of at least one support body 6 may be provided, which body may conveniently consist of a sleeve of a composite material or other; this support body 6 is associated with the main body 2 and operatively associable with a bearing structure of a bicycle, a cyclette or the like, following connection typologies substantially of known type.

In addition, in order to increase the rider/athlete's comfort and mitigate the effects due the unevenness of the roadway, saddle 1 may be provided with a given number of shock absorbing bodies 7 which are operatively associated with the main body 2 (and more particularly with the support elements, but also with the rest sub-elements, if any) and exactly can be interposed between the main body and a rider under operating conditions.

In accordance with a particularly appreciable embodiment of the present invention, at least one, and preferably all, of the support elements or rest sub-elements comprise a respective shock absorbing body 7 (that can extend at least partly over a corresponding portion of the seating surface defined by the support element or rest sub-element, preferably at the region where the rider/athlete's body parts are in contact with saddle 1).

On the other hand, to simplify accomplishment of saddle 1 (and reduce the production costs), the presence of a single shock absorbing body 7 may be provided which extends over the whole seating surface and even over the main opening 5 (or the secondary openings, if any); in this case, the particular functional features of the saddle 1 in accordance with the present invention are not impaired, because this shock absorbing body 7 has such mechanical characteristics that it is deformed by the rider's weight and therefore surely cannot exert any pressing action against the body of the rider himself/herself.

If it is wished to make saddle 1 adaptable to different anatomies of different riders (or at all events if a single rider should wish to optimize his/her riding position), adjusting means 8 may be provided which is operatively interposed between at least two support elements or rest sub-elements.

Advantageously, this adjusting means 8 can be activated to adjust a transverse size of the main opening 5 and/or of one or more secondary openings; in this way the main opening 5 can be reduced or widened so as to always reach an optimal compromise between the absence of a pressing action and arrangement of an adequate rest surface.

The adjusting means 8 can be made in any manner; for example it may comprise at least one worm screw having the opposite ends connected with two support elements (or more generally, with at least two rest sub-elements) : in this way, by operating the screw the support elements/rest sub-elements will move close to or away from each other, thereby varying the width of the main opening 5 and/or of one or more of the secondary openings.

Finally, it is to be pointed out that it is a further aim of the present invention to make available a bicycle or a cyclette (or at all events a similar training vehicle or equipment) comprising at least one saddle 1 having one or more of the above described features.

The invention achieves important advantages.

In fact, by virtue of the particular structural and geometrical features herein described and claimed, the contact pressure between the rider's parts that are anatomically "at risk" and the saddle can be advantageously mitigated (or even eliminated) thereby avoiding traumas and/or both prostatic and urethral inflammations arising.

At the same time, a steady and well distributed support for the rider is at all events ensured, the rider's weight being conveniently discharged into the gluteal and thigh-interior regions (that have an important muscle tone and therefore can be submitted to greater pressures).

Finally, division of the saddle into several parts separated from each other enables an optimal structural efficiency to be maintained while obtaining a reduced weight.

## Claims

1. A saddle, in particular for bicycles, cyclettes or the like, comprising a main body (2) defining a seating surface for a rider, said main body (2) having a rear portion (3) and a front portion (4) associated with said rear portion (3), **characterized in that** it further comprises a given number of support elements that in cooperation define said seating surface, said support elements further defining at least one main opening (5) uninterruptedly extending from said rear portion (3) to said front portion (4).

2. A saddle as claimed in claim 1, **characterized in that** it comprises two support elements (2a, 2b) disposed in side by side relationship with each other, said support elements (2a, 2b) being preferably symmetric with respect to a longitudinal axis of said saddle (1).

3. A saddle as claimed in claim 1 or 2, **characterized in that** at least one and preferably both of the support elements (2a, 2b) define a first and a second rear rest surfaces (3a, 3b) at the rear portion (3) and a first and a second front rest surfaces (4a, 4b) at the front portion (4).

4. A saddle as claimed in claim 3, **characterized in that** the first and second rear rest surfaces (3a, 3b) are geometrically separated from each other.

5. A saddle as claimed in claim 3, **characterized in that** the first and second front rest surfaces (4a, 4b) are geometrically separated from each other.

6. A saddle as claimed in the preceding claims, **characterized in that** at least one of the support elements comprises a predetermined number of rest sub-elements, each of said rest sub-elements defining a partial-rest surface, said partial-rest surfaces being separated by secondary openings preferably extending in directions transverse to the main opening (5).

7. A saddle as claimed in claim 6, **characterized in that** the main body (2) comprises four rest sub-elements that in cooperation define the seating surface, a first rest sub-element defining the first rear rest surface (3a), a second rest sub-element defining the second rear rest surface (3b), a third rest sub-element defining the first front rest surface (4a) and a fourth rest sub-element defining the second front rest surface (4b:

8. A saddle as claimed in anyone of the preceding claims, **characterized in that** the main body (2) further comprises a connecting portion (2c) extending between at least two support elements and/or two rest sub-elements, said connecting portion (2c) preferably defining, in cooperation with the support elements (2a and 2b) at least said main opening (5) and most preferably defining, in cooperation with a given number of rest sub-elements, at least one of said secondary openings.

9. A saddle as claimed in anyone of the preceding claims, **characterized in that** it further comprises a support body (6) associated with the main body (2) and operatively associable with a bearing structure of a bicycle, a cyclette or the like.

10. A saddle as claimed in anyone of the preceding claims, **characterized in that** it comprises a given number of shock absorbing bodies (7) operatively associated with the main body (2) and susceptible of being interposed between said main body and a rider under operating conditions.

11. A saddle as claimed in claim 10, **characterized in that** one and preferably all of the support elements and/or sub-elements comprise a respective shock absorbing body (7), said shock absorbing body (7) extending at least partly on a corresponding portion of the seating surface defined by the support element and/or sub-element.

12. A saddle as claimed in anyone of the preceding claims, **characterized in that** it comprises adjusting means (8) operatively interposed between at least two support elements and/or sub-elements, said adjusting means (8) being preferably adapted to be activated for the purpose of adjusting a transverse size of the main opening (5) and/or of one or more secondary openings.

13. A saddle as claimed in claim 12, **characterized in that** said adjusting means (8) comprises at least one worm screw having the opposite ends connected with two support elements and/or rest sub-elements.

14. A saddle for bicycles, cyclettes and the like, comprising a main body (2) defining a seating surface and having a rear portion (3) and a front portion (4) associated with the rear portion (3), **characterized in that** the main body (2) comprises two support elements 2a, 2b disposed in side by side relationship with each other and in cooperation defining the seating surface, a first support element 2a defining a first rear rest surface (3a) and a first front rest surface (4a), a second support element (2b) defining a second rear rest surface (3b) and a second front rest surface (4b); the first rear and front rest surfaces (3a, 4a) being separated from the second rear and front rest surfaces (3b, 4b) by an opening (5) uninterruptedly extending from the rear portion (3) to the front portion (4) of the saddle (1).

15. A bicycle, cyclette or similar vehicle, **characterised in that** it comprises at least one saddle (1) in accordance with anyone of the preceding claims.
